# EUROPEAN PATENT SPECIFICATION

(11) **EP 3 812 339 B1**
(45) Date of publication and mention of the grant of the patent: **27.07.2022**
(21) Application number: 19204385.9
(22) Date of filing: 21.10.2019
(51) Int. Cl.: B66F 9/06, B65G 1/04

(54) **MATERIAL HANDLING VEHICLE**
MATERIALHANDHABUNGSFAHRZEUG
VÉHICULE DE MANUTENTION DE MATÉRIAUX

(43) Date of publication of application: 28.04.2021
(73) Proprietor: Toyota Material Handling Manufacturing Sweden AB, 595 81 Mjölby (SE)
(72) Inventor: NORDENHEM, Mikael, 590 49 Vikingstad (SE); NIKOLIC, Davor, 582 40 Linköping (SE)
(74) Representative: Zacco Sweden AB

(56) References cited:
- US-A- 3 848 755
- US-A1- 2019 291 951

## Description

### FIELD OF THE INVENTION

The present invention is related to a material handling vehicle according to the appended claims.

### BACKGROUND

In material handling operations in a warehouse there is often a desire to move pallets further into a pallet rack or vice versa, to collect a pallet from the depth of a pallet rack. For those operations it is known to use a material handling vehicle that can either operate independently or be remotely controlled. The vehicle can typically be lifted on the load carrier, e.g. forks of a warehouse truck, and be set down in the rack. The small vehicle can then move in under a pallet and then lift the pallet and transport it within the warehouse rack. The warehouse rack needs to be adapted for this operation. The transport in the rack includes the lifting and setting down of the transported pallet. As the material handling vehicle is transported by the ware house truck there has been identified that the material handling vehicle can move on the forks.

One such material handling vehicle is described in the document US 2019/0291951 A1.

### SHORT DESCRIPTION OF THE INVENTION

It has thus been identified that the movement of the material handling vehicle on the forks may risk that the vehicle is dropped, for example when the warehouse truck turns around a warehouse rack.

In order to solve the above problem at least partially it is presented a material handling vehicle comprising, a device for lifting and carrying a load. The vehicle further comprises at least a pair of vertical wheels. The vehicle also comprises an underside, an upper side and an energy source. A travel motor is also comprised in the vehicle. The material handling vehicle is arranged such that it is able to travel in under a load, lift and transport the load. Also the material handling vehicle comprises at least one first electromagnet on the underside of the vehicle, such that when the electromagnet is supplied with electric power it will be able to attach the material handling vehicle to a magnetic surface. The electromagnet is movably attached in the material handling vehicle such that the electromagnet is able to move in vertical direction in relation to the underside of the vehicle. The electromagnet is also able to follow the magnetic surface as the surface moves in vertical direction in relation to the underside of the material handling vehicle. Further the electromagnet is able to move to between a first and a second end position. The first end position is a retracted position and the second end position is an extended position in relation to the underside of the vehicle. At the second end position the distance of the lower most surface of the electromagnet to the underside of the vehicle has a predetermined distance value. Further the material handling vehicle comprises a sensor at the underside of the vehicle, which sensor is able to control the supply of electric power to the electromagnet. The control is based on a detected distance from the sensor to the surface positioned next to the underside. And, the sensor is arranged to have a detection range that is smaller than the predetermined value of the distance of the lower most surface of the electromagnet to the underside of the vehicle.

The advantage of the new material handling vehicle is that there can be a very secure fit of the material handling vehicle to the load carrier of the warehouse truck, but at the same time a very simple and reliable solution is achieved. A further advantage is that the release and attachment of the material handling vehicle can be automated in a very simple and straight forward manner.

The material handling vehicle may also be configured with the electromagnet attached to a pin that in turn is slidable in a sleeve that is attached to the material handling vehicle.

It is particularly advantageous to make the electromagnet being able to slide with a pin in a sleeve. A good control of the movement is achieved and the electromagnet does not risk to be wedged such that the electromagnet's movement is locked.

The material handling vehicle may also be configured with a pin comprising an end stop device arranged to interact with an end side of the sleeve. It is preferred that the end stop is adjustable on the pin such that the predetermined distance value of the second end position can be adjusted.

It is particularly advantageous to have an end stop that can prevent the electromagnet from moving out of position or even detaching from the material handling vehicle. The end stop also sets the second end position of the electromagnet in an simple and efficient manner.

The material handling vehicle may also be configured with a spring, wherein the spring is attached to the electromagnet and the material handling vehicle such that the electromagnet is able to attain the first end position by means of the spring force.

By introduction of the spring the electromagnet can be safely returned into position and the detachment of the electromagnet from the surface adjacent the electromagnet has an improved automation. The spring will also help in resilience when transporting the material handling vehicle.

The material handling vehicle may also be configured by comprising a pair of horizontal wheels, wherein the horizontal wheels are arranged to extend outside respective longitudinal side of the material handling vehicle.

The horizontal wheels augments the tracking in the rails of the ware house rack and the material handling vehicle is made safer, as the material handling vehicle is much more stable when moving.

The material handling vehicle may also be configured such that the detection range of the sensor is adjustable within a range that is lower than the distance with the predetermined value of the second extended position.

With an adjustable detection range it is possible to adapt the control of the power supply. It is for example possible to adjust the detection range if the forks of a large vehicle intended to transport the material handling vehicle has an uneven surface.

The material handling vehicle may also be configured such that the detection range of the sensor is determined by the hardware of the sensor and that the sensor thus does not have an adjustable detection range.

By hardware programming the sensors it provides for a very safe and reliable usage of the attachment and detachment of t electromagnets from the forks of a larger material handling vehicle intended to transport the material handling vehicle.

The material handling vehicle may also be configured such that there are provided two sensors, wherein both sensors have the same detection range. The two sensors are preferably arranged in a position on the underside such that a line drawn between the centre of the respective sensor will not be parallel with either of the peripheral sides of the vehicle. Further there is provided at least one further electromagnet. This/these electromagnet or electromagnets are configured in the same way as the first electromagnet. The respective sensor can only control the power supply to one of the electromagnets.

By applying further electromagnets and further sensors, the attachment of the material handling vehicle is made much more safe. The complete operation of the movement of the material handling vehicle is more secure and there is introduced a redundancy in the attachment by means of dedicated sensors

### LIST OF DRAWINGS

Figure 1 discloses a material handling vehicle according to the disclosure in a warehouse rack.
Figure 2 discloses a material handling vehicle according to the disclosure from above.
Figure 3 discloses a material handling vehicle according to the disclosure in a section view.
Figure 4 discloses a material handling vehicle according to the disclosure from below.
Figure 5 discloses a material handling vehicle according to the disclosure from a first vertical side.
Figure 6 discloses a material handling vehicle according to the disclosure from a second vertical side.
Figure 7 discloses a electromagnet according to the disclosure.
Figure 8 discloses a lifting mechanism of a material handling vehicle according to the disclosure.
Figure 9 discloses a reach truck carrying a material handling vehicle according to the disclosure.
Figure 10 discloses a control assembly according to the disclosure.
Figure 11 discloses a control assembly according to figure 10 as modified with a control unit.
Figure 12 discloses a remote control and a wireless interface on a material handling vehicle according to the disclosure.
Figure 13 discloses the activation of the electromagnet
Figure 14 discloses the deactivation of the electromagnet

### DETAILED DESCRIPTION

The present application is related to a particular type of material handling vehicles. The type can be termed as an independent automated guided vehicle. But it can also be termed as being a radio controlled material handling vehicle. The vehicle can have standard wheels which allows it to be operated on the ground in a warehouse. The vehicle can also have wheels that are adapted such that the vehicle only can be operated on rails. The rails can preferably be part of a warehouse rack. The vehicle can be so designed such that it can self-navigate from a first position to a second position. The vehicle can also be designed such that it can be remotely controlled. The vehicle in general is small.

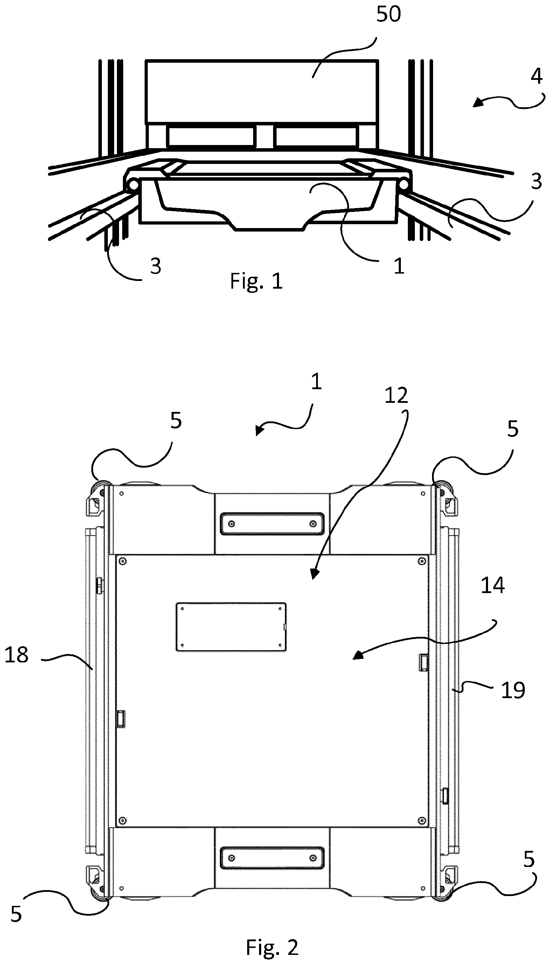

Thus, figures 1-6 disclose a small material handling vehicle 1 according to the disclosure. The vehicle is arranged to be able to travel on rails 3 in a warehouse rack 4 in a warehouse. The material handling vehicle 1 can transport a load 50 within a rack 4, i.e. further into the rack 4 and vice versa collect a load, e.g. a pallet from the depth of the rack. The vehicle 1 has horizontal wheels 5 on the side and vertical wheels 6, preferably the wheels 5,6 are positioned on the longitudinal sides 32, 33, or more preferred in the corner of the vehicle. The horizontal wheels 5 provide stabilisation in transversal direction of the vehicle 1 by supporting on vertical section of the rails 3. At least some of the wheels 5, 6 are powered by a motor for transporting the vehicle 1 on said rails 3, it is preferred that the vertical wheels 6 are powered and driven by an electric motor. There is further provided a power source 28, preferably a battery.

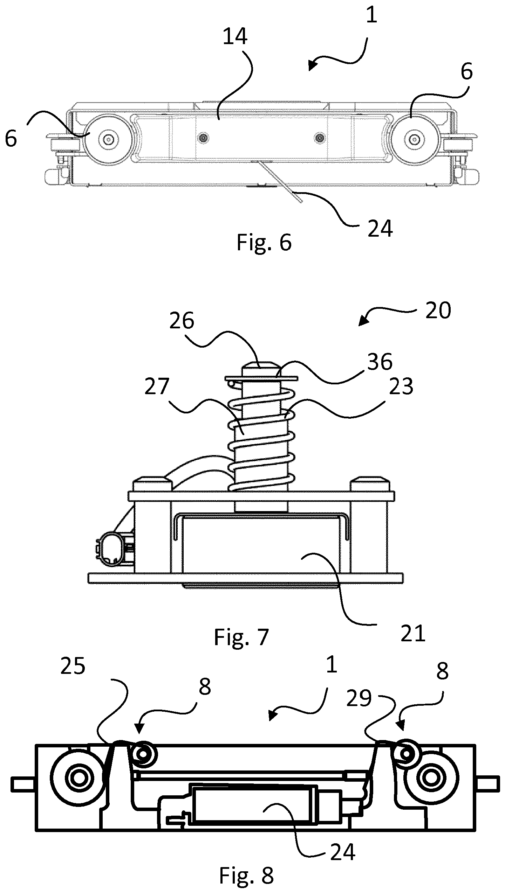

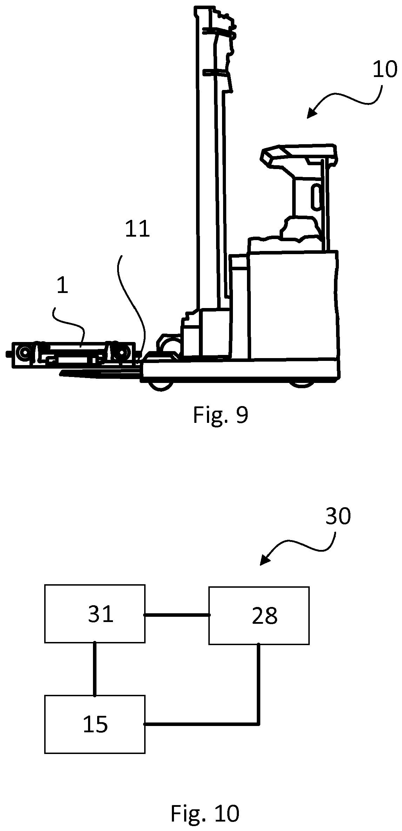

The vehicle 1 has a lifting mechanism 8 as seen in figure 8, such that the vehicle 1 is able to lift a load. The lifting mechanism may be arranged by an actuator 24 that can push on at least two levers 25, 29. The vehicle 1 is further completely transportable by any material handling vehicle 10 that has a pair of forks as a load carrier 11, see figure 9.

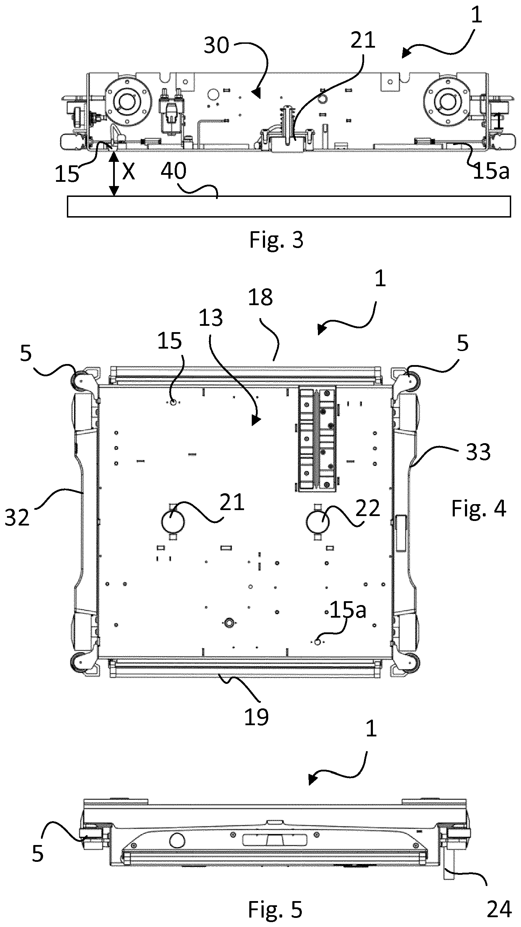

When transported on the load carrier 11 of a larger material handling vehicle 10, the material handling vehicle 1 is provided with a means for preventing the material handling vehicle 1 to slide on the load carrier 11. Thus, the material handling vehicle 1 can be attached to the load carrier 11 by means of at least one electromagnet 21, see figure 4. The electromagnet 21 is movable in vertical direction. The electromagnet 21 is part of an electromagnet assembly 20 comprising the attachment means of the electromagnet 21, see for example figures 7, 13, 14.

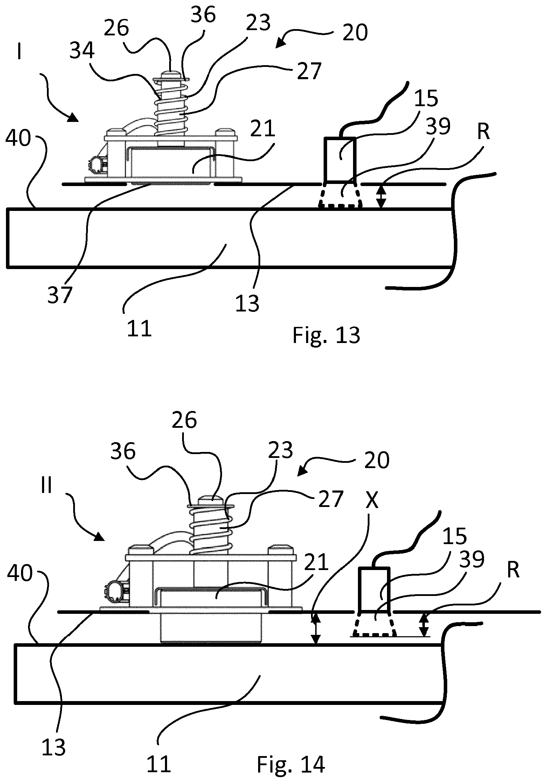

The electromagnet 21 is movable between a first end position I as disclosed in fig. 13, and a second end position II as disclosed in fig. 14. In the second end position II the lower most surface 37 of the electromagnet 21 is positioned a predetermined distance value X from the underside 13 of the vehicle 1. In the first end position I the electromagnet 21 is positioned in a retracted manner as disclosed in figure 7 and 13. In the first end position I the lower most surface 37 of the electromagnet 21 is preferred to be level and parallel with the underside 13 of the material handling vehicle 1. The movement from the second end position II to the first end position I may be actuated by a spring 23. The spring 23 is attached to the magnet 21. By attached is meant both directly or indirectly to the magnet 21, but affecting the movement of the magnet with the spring force. See figure 27. It is also comprised that attached means that the spring 23 may attached by means of the spring force between for example the end stop 36 and a plate.

The movement in vertical direction of the electromagnet 21 is preferred to be made by a sliding function of a pin 26 attached to the electromagnet 21 that slides in a sleeve 27. In the downward direction the electromagnet 21 preferably has an end stop 36, such that the electromagnet 21 will not be pulled out if magnetically attached to a surface 40 which moves away from the underside 13 of the material handling vehicle 1. The end stop 36 can be adjustable on the pin 26. In this way the distance X of the second end position II can be adjusted.

A sensor 15 is comprised on the underside 13 of the vehicle 1, as can be seen in figure 3, 4, 13 and 14. The sensor 15 is not movable with the electromagnet 21. The sensor 15 is arranged to be able to detect the distance from the sensor to a surface 40 that is extended under the electromagnet 21 and the sensor 15. The sensor 15 is preferred to be calibrated so that it detects the distance of the lower most surface 37 of the electromagnet 21 to a surface 40 positioned below the electromagnet 21.

The sensor 15 is configured such that it has a limited detection range R, fig. 13 and 14. This means that the sensor cannot detect any surface that is positioned farther away from the sensor 15 than the detection range R. The detection range R might be adjustable, but only within limits that does not exceed or is smaller than the predetermined distance between the surface 37 of the movable electromagnet 21 and the underside 13 of the material handling vehicle 1, when in the second end position II.

The sensor 15 is preferably an inductive sensor 15 that can detect a magnetic surface, however it is of course possible to use another sensor such a light sensor, IR sensors or ultra sound sensor which can detect any surface.

Further there is preferred that two sensors 15, 15a are provided which can be seen in Fig 3. This means that there are both a first sensor 15, and a second sensor 15a. The sensors are preferred to have a position that is close to a diagonal of the material handling vehicle 1. This means that the first sensor 15 is closer to a first side 18 than a second side 19 and at the same time being closer to a further side 32 perpendicular to the first side 18, than a fourth side 33. The second sensor 15a thus being closer to side 19 and 33 instead. Thus when load carrier 11 addresses the at least one electromagnet 20. The first sensor 15 will be closer to the end of a first fork 11, and the second sensor 15a will be closer to the base of the second fork 11. This provides for a secure way of attaching the material handling vehicle 1 when being transported as seen in figure 9.

It is preferred to include at least two electromagnets 21, 22 in the vehicle 1. Both electromagnets are then configured in the same way. Each electromagnet 21, 22 have a respective dedicated sensor 15, 15a, which both are configured in the same way, as discussed above.

A control assembly 30 see figure 10, is arranged on the material handling vehicle 1 comprising the sensor 15. The control assembly 30 is arranged such that it is able to control the power to the electromagnet 21. The control assembly 30 can achieve this in a very simple manner. By choosing a sensor 15 which have a limited detection range R that correspond to a predetermined detection distance X, i.e. the second end position II of the electromagnet 21, the uncoupling of the electromagnet 21 from a surface 40 can be made very efficiently and safe. I.e. the sensor 15 is configured such that it cannot detect a surface that is further away than the predetermined distance X of the second end position II. The control assembly 30 can thus comprise a switch 31 that is able to control the power to the electromagnet 21 based on a signal sent from the sensor 15. Thus, when the sensor 15 detects the presence of a surface 15 within the range R of the sensor 15 the switch will be input a signal that will power the electromagnet 21. And when the sensor 15 can no longer detect a surface the signal to the switch 31 is turned off and the switch is so configured that the switch turns off the power to the electromagnet 21. And by arranging the electromagnet 21 movable with a range of extension that matches the detection range R of the sensor 15, it is possible to move the electromagnet when attached to the surface 40 outside the range of the sensor. The sensor will then not detect any surface 40 and the power supply to the electromagnet 21 will be shut down. By arranging the control assembly 30 in this simple manner a very reliable and simple solution is achieved.

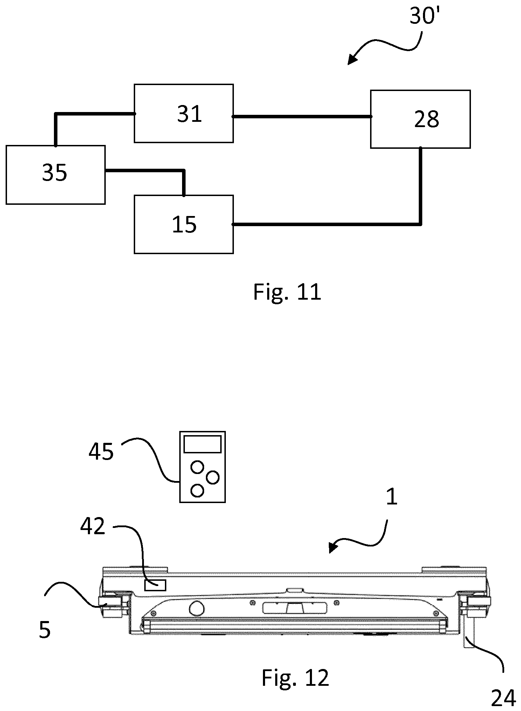

In an alternative control assembly 30', it is also possible to have a control unit 35, se figure 11, on the material handling vehicle 1. The control unit 35 being able to detect the signal from the sensor 15, and by applying a stored software the control unit is able to control the power to the electromagnet 21. Even if this is more complex solution it is combinable with the disclosure without control unit. Thus, the control unit 35 provides for the possibility that a redundancy is created. For example in a situation where a sensor 15 has moved out of position such that it detects a surface 40 that is farther away than the end stop for the movement to of the electromagnet 21. I.e. the sensor is actually protruding out of the underside 13 of the material handling vehicle 1. A control unit 35 can detect this situation and for example disable the electromagnet 21 from being supplied with power. If a control unit 31 is used for the control of the power a more safe solution is thus achieved. This allows for a precise control of the detection range of the sensor 15, by mean of a parameter controlled software, as long as the detection range R is not exceeding the second end position II and the distance value X of this end position for the lower most surface37 of the electromagnet 21. That is the desired predetermine distance 15 for a sending power to the electromagnet 21, or turning off power to the electromagnet 21 can be set as a software parameter.

The function of the present disclosure will now be explained. A large truck 10 for example a reach truck or a stacker truck transports the material handling vehicle 1 to a warehouse rack 4 and puts the material handling vehicle down on the rails 3 of the warehouse rack 4. As the large truck 10 lowers the forks 11, the electromagnet 21 which are gripping onto the forks by means of magnetic force, will follow the forks 11 downwards. As the electromagnet 21 is moved downwards the material handling vehicle 1 stays in position on the rails 3. The sensor 15 detects the distance to the fork 11 on which the corresponding electromagnet 21 is gripping. When the distance exceeds a predetermined value corresponding to the predetermined range R of the sensor 15, the electric power supply to the electromagnet 21 is turned off. Thus, the electromagnet 21 will no longer grip onto the fork 11 and will instead be retracted to the retracted position by means of the spring 23, and the large truck 10 can move away.

In a further disclosure of the function the large truck 10 approaches a warehouse rack 4 where a material handling vehicle 1 is positioned. When the forks 11 of the large truck 10 is extended under the underside 13 of the material handling vehicle 1 the sensor 15 can detect the distance to the forks 11 as soon as the fork 11 is within the range R of the sensor 15. As the sensor 15 detects the fork 11, the power to the electromagnet 21 is turned on and the electromagnet 21 can grip onto the fork 11. The fork 11 can thus now lift the material handling vehicle 1 and at the same time the electromagnet 21 is able to grip onto the fork by magnetic force. The large truck 10 can now transport the material handling vehicle 1 as the electromagnet grips the fork and keeps the material handling vehicle 1 in position on the forks 11.

The material handling vehicle 1 can further comprise a wireless interface 42. With a remote control 45 the material handling vehicle 1 can thus have its function and operation controlled. This provides for a better operation of the material handling vehicle in the ware house rack 4. See figure 12.

## Claims

1. A material handling vehicle (1) comprising, a device (8) for lifting and carrying a load, at least a pair of vertical wheels (6), an underside (13), an upper side (12), an energy source (14), a travel motor (16), wherein the material handling vehicle (1) is arranged such that it is able to travel in under a load, lift and transport the load (50), further the material handling vehicle (1) comprises at least one first electromagnet (21) on the underside (13) of the vehicle (1), such that when the electromagnet (21) is supplied with electric power it will be able to attach the material handling vehicle (1) to a magnetic surface (40), wherein the electromagnet (21) is movably attached in the material handling vehicle (1) such that the electromagnet (21) is able to move in vertical direction in relation to the underside (13) of the vehicle (1), wherein the electromagnet (21) is able to follow the magnetic surface (40) as the surface (40) moves in vertical direction in relation to the underside (13) of the material handling vehicle (13),
wherein
the electromagnet (21) is able to move to between a first and a second end position (I, II), wherein the first end position (I) is a retracted position and the second end position (II) is an extended position in relation to the underside (13) of the vehicle (1), at which second end position (II) the distance of the lower most surface (37) of the electromagnet (21) to the underside (13) of the vehicle (1) has a predetermined distance value (X), wherein the material handling vehicle (1) further comprises a sensor (15) at the underside (13) of the vehicle, which sensor (15) is able to control the supply of electric power to the electromagnet (21) based on a detected distance from the sensor (15) to the surface (40) positioned next to the underside (13), **characterized in that** the sensor (15) is arranged to have a detection range (R) that is smaller than the predetermined value (X) of the distance of the lower most surface (37) of the electromagnet (21) to the underside (13) of the vehicle (1).

2. The material handling vehicle (1) according to claim 1, wherein the electromagnet (21) is attached to a pin (26) that in turn is slidable in a sleeve (27) that is attached to the material handling vehicle (1).

3. The material handling vehicle (1) according to claim 2, wherein the pin (26) comprises an end stop (36) device arranged to interact with an end side (34) of the sleeve (27), preferably the end stop (26) is adjustable on the pin (26) such that the predetermined distance value (X) of the second end position (II) can be adjusted.

4. The material handling vehicle (1) according to claim 1 or 2, wherein further comprised is a spring (23), wherein the spring (23) is attached to the electromagnet (21) and the material handling vehicle (1) such that the electromagnet (21) is able to attain the first end position (I) by means of the spring force.

5. The material handling vehicle (1) according to any of the claims 1-4 above, where in the vehicle (1) further comprises a pair of horizontal wheels (5), wherein the horizontal wheels (5) are arranged to extend outside respective longitudinal side (32, 33) of the material handling vehicle (1).

6. The material handling vehicle (1) of any of the claims above, wherein the detection range (R) of the sensor (15) is adjustable within a range that is lower than the distance with the predetermined value (X) of the second extended position (II).

7. The material handling vehicle (1) of any of the claims 1-5 above, wherein the detection range (R) of the sensor (15) is determined by the hardware of the sensor and that the sensor thus does not have an adjustable detection range (R).

8. The material handling vehicle (1) of any of the claims above, wherein there are provided two sensors (15, 15a), wherein both sensors (15, 15a) have the same detection range (R), preferably the two sensors are arranged in a position on the underside (13) such that a line drawn between the centre of the respective sensor will not be parallel with either of the peripheral sides (18, 19, 32, 33) of the vehicle, and further there is provided at least one further electromagnet (22), wherein this/these electromagnet or electromagnets are configured in the same way as the first electromagnet (21), and wherein the respective sensor (15, 15a) only can control the power supply to one of the electromagnets (21, 22).

## Patentansprüche

1. Materialhandhabungsfahrzeug (1) umfassend eine Vorrichtung (8) zum Heben und Tragen einer Last, mindestens ein Paar von vertikalen Rädern (6), eine Unterseite (13), eine Oberseite (12), eine Energiequelle (14), einen Fahrmotor (16), wobei das Materialhandhabungsfahrzeug (1) so ausgelegt ist, dass es dazu im Stande ist, sich unter eine Last einzufahren und die Last (50) zu heben und zu transportieren, und das Materialhandhabungsfahrzeug (1) weiter mindestens einen ersten Elektromagneten (21) an der Unterseite (13) des Fahrzeugs (1) umfasst, so dass bei der Versorgung des Elektromagneten (21) mit elektrischer Leistung der Elektromagnet dazu im Stande sein wird, das Materialhandhabungsfahrzeug (1) an einer magnetischen Oberfläche (40) zu befestigen, wobei der Elektromagnet (21) so im Materialhandhabungsfahrzeug (1) beweglich befestigt ist, dass der Elektromagnet (21) dazu im Stande ist, sich in Vertikalrichtung bezüglich der Unterseite (13) des Fahrzeugs (1) zu bewegen, wobei der Elektromagnet (21) dazu im Stande ist, der magnetischen Oberfläche (40) zu folgen, da sich die Oberfläche (40) in Vertikalrichtung bezüglich der Unterseite (13) des Materialhandhabungsfahrzeugs (13) bewegt,
wobei der Elektromagnet (21) dazu im Stande ist, sich zwischen einer ersten und einer zweiten Endposition (I, II) zu bewegen, wobei die erste Endposition (I) eine zurückgezogene Position ist, und die zweite Endposition (II) eine ausgefahrene Position bezüglich der Unterseite (13) des Fahrzeugs (1) ist, bei welcher zweiten Endposition (II) der Abstand der untersten Oberfläche (37) des Elektromagneten (21) zur Unterseite (13) des Fahrzeugs (1) einen vorbestimmten Abstandswert (X) aufweist, wobei das Materialhandhabungsfahrzeug (1) weiter einen Sensor (15) an der Unterseite (13) des Fahrzeugs umfasst, welcher Sensor (15) die Versorgung elektrischer Leistung an den Elektromagneten (21) basierend auf einem detektierten Abstand des Sensors (15) zu der neben der Unterseite (13) angeordneten Oberfläche (40) steuern kann,
**dadurch gekennzeichnet, dass** der Sensor (15) ausgelegt ist, um einen Detektionsbereich (R) zu haben, der kleiner als der vorbestimmte Wert (X) des Abstands der untersten Oberfläche (37) des Elektromagneten (21) zur Unterseite (13) des Fahrzeugs (1) ist.

2. Materialhandhabungsfahrzeug (1) nach Anspruch 1, wobei der Elektromagnet (21) an einem Stift (26) befestigt ist, der wiederum in einer Hülse (27) verschieblich ist, die an dem Materialhandhabungsfahrzeug (1) befestigt ist.

3. Materialhandhabungsfahrzeug (1) nach Anspruch 2, wobei der Stift (26) eine Endanschlagvorrichtung (36) umfasst, die zum Zusammenwirken mit einer Endseite (34) der Hülse (27) ausgelegt ist, bevorzugt wobei der Endanschlag (26) an dem Stift (26) justierbar ist, so dass der vorbestimmte Abstandswert (X) der zweiten Endposition (II) justiert werden kann.

4. Materialhandhabungsfahrzeug (1) nach Anspruch 1 oder 2, wobei weiter eine Feder (23) umfasst ist, wobei die Feder (23) an dem Elektromagneten (21) und dem Materialhandhabungsfahrzeug (1) derart befestigt ist, dass der Elektromagnet (21) dazu im Stande ist, mittels der Federkraft die erste Endposition (I) zu erlangen.

5. Materialhandhabungsfahrzeug (1) nach einem der obigen Ansprüche 1-4, wobei das Fahrzeug (1) weiter ein Paar von horizontalen Rädern (5) umfasst, wobei die horizontalen Räder (5) dazu ausgelegt sind, sich über die jeweilige Längsseite (32, 33) des Materialhandhabungsfahrzeugs (1) zu erstrecken.

6. Materialhandhabungsfahrzeug (1) nach einem der obigen Ansprüche, wobei der Detektionsbereich (R) des Sensors (15) innerhalb von einem Bereich justierbar ist, der niedriger als der Abstand mit dem vorbestimmten Wert (X) der zweiten ausgefahrenen Position (III) ist.

7. Materialhandhabungsfahrzeug (1) nach den obigen Ansprüchen 1-5, wobei der Detektionsbereich (R) des Sensors (15) durch die Hardware des Sensors bestimmt ist, und dass der Sensor somit keinen justierbaren Detektionsbereich (R) aufweist.

8. Materialhandhabungsfahrzeug (1) nach einem der obigen Ansprüche, wobei zwei Sensoren (15, 15a) vorgesehen sind, wobei beide Sensoren (15, 15a) denselben Detektionsbereich (R) aufweisen, bevorzugt die beiden Sensoren in einer Position an der Unterseite (13) so angeordnet sind, dass eine Linie, die durch das Zentrum des jeweiligen Sensors gezogen wird, zu keiner der peripheren Seiten (18, 19, 32, 33) des Fahrzeugs parallel sein wird, und ferner mindestens ein weiterer Elektromagnet (22) vorgesehen ist, wobei diese(r) Elektromagnet(e) von Elektromagneten in derselben Art und Weise wie der erste Elektromagnet (21) ausgebildet ist bzw. sind, und wobei der jeweilige Sensor (15, 15a) die Energieversorgung an nur einen der Elektromagnete (21, 22) steuern kann.

## Revendications

1. Véhicule de manutention de matériaux (1) comprenant un dispositif (8) pour soulever et porter une charge, au moins une paire de roues verticales (6), un côté inférieur (13), un côté supérieur (12), une source d'énergie (14), un moteur de déplacement (16), dans lequel le véhicule de manutention de matériaux (1) est agencé de telle sorte qu'il est capable de se déplacer sous une charge, de soulever et de transporter la charge (50), en outre le véhicule de manutention de matériaux (1) comprend au moins un premier électroaimant (21) sur le côté inférieur (13) du véhicule (1), de sorte que lorsque l'électroaimant (21) est alimenté en énergie électrique, il pourra fixer le véhicule de manutention de matériaux (1) à une surface magnétique (40), dans lequel l'électroaimant (21) est fixé de manière mobile dans le véhicule de manutention de matériaux (1) de sorte que l'électroaimant (21) est capable de se déplacer dans la direction verticale par rapport au côté inférieur (13) du véhicule (1), dans lequel l'électroaimant (21) est capable de suivre la surface magnétique (40) lorsque la surface (40) se déplace dans la direction verticale par rapport au côté inférieur (13) du véhicule de manutention de matériaux (13), dans lequel l'électroaimant (21) est mobile entre une première et une deuxième positions extrêmes (I, II), la première position extrême (I) étant une position rétractée, et la deuxième position extrême (II) étant une position étendue par rapport au côté inférieur (13) du véhicule (1), deuxième position extrême (II) à laquelle la distance de la surface la plus basse (37) de l'électroaimant (21) au côté inférieur (13) du véhicule (1) a une valeur de distance prédéterminée (X), dans lequel le véhicule de manutention de matériaux (1) comprend en outre un capteur (15) au niveau du côté inférieur (13) du véhicule, lequel capteur (15) est capable de réguler l'alimentation en énergie électrique de l'électroaimant (21) sur la base d'une distance détectée du capteur (15) à la surface (40) positionnée près du côté inférieur (13), **caractérisé en ce que** le capteur (15) est agencé pour avoir une plage de détection (R) qui est inférieure à la valeur prédéterminée (X) de la distance de la surface la plus basse (37) de l'électroaimant (21) au côté inférieur (13) du véhicule (1).

2. Véhicule de manutention de matériaux (1) selon la revendication 1, dans lequel l'électroaimant (21) est fixé à une broche (26) qui peut, à son tour, coulisser dans un manchon (27) qui est fixé au véhicule de manutention de matériaux (1).

3. Véhicule de manutention de matériaux (1) selon la revendication 2, dans lequel la broche (26) comprend un dispositif de butée (36) agencé pour interagir avec un côté d'extrémité (34) du manchon (27), de préférence la butée (26) est réglable sur la broche (26) de sorte que la valeur de distance prédéterminée (X) de la deuxième position extrême (II) peut être ajustée.

4. Véhicule de manutention de matériaux (1) selon la revendication 1 ou 2, comprenant en outre un ressort (23), dans lequel le ressort (23) est fixé à l'électroaimant (21) et au véhicule de manutention de matériaux (1) de sorte que l'électroaimant (21) peut atteindre la première position extrême (I) au moyen de la force du ressort.

5. Véhicule de manutention de matériaux (1) selon l'une quelconque des revendications précédentes 1 à 4, dans lequel le véhicule (1) comprend en outre une paire de roues horizontales (5), dans lequel les roues horizontales (5) sont agencées pour s'étendre à l'extérieur du côté longitudinal respectif (32, 33) du véhicule de manutention de matériaux (1).

6. Véhicule de manutention de matériaux (1) selon l'une quelconque des revendications précédentes, dans lequel la plage de détection (R) du capteur (15) est réglable dans une plage qui est inférieure à la distance avec la valeur prédéterminée (X) de la deuxième position étendue (III).

7. Véhicule de manutention de matériaux (1) selon les revendications précédentes 1 à 5, dans lequel la plage de détection (R) du capteur (15) est déterminée par le matériel du capteur, et en ce que le capteur n'a donc pas de plage de détection réglable (R).

8. Véhicule de manutention de matériaux (1) selon les revendications précédentes, dans lequel sont prévus deux capteurs (15, 15a),
dans lequel les deux capteurs (15, 15a) ont la même plage de détection (R), de préférence les deux capteurs sont agencés dans une position sur le côté inférieur (13) si bien qu'une ligne tracée entre le centre du capteur respectif n'est parallèle à aucun des côtés périphériques (18, 19, 32, 33) du véhicule, et en outre il est prévu au moins un autre électroaimant (22), dans lequel cet électroaimant ou ces électroaimants sont configurés de la même manière que le premier électroaimant (21), et dans lequel le capteur respectif (15, 15a) ne peut réguler l'alimentation en énergie électrique vers l'un des électroaimants (21, 22).
